# EUROPÄISCHE PATENTSCHRIFT

(11) **EP 0 824 431 B1**
(45) Veröffentlichungstag und Bekanntmachung des Hinweises auf die Patenterteilung: **17.03.1999**
(21) Anmeldenummer: 96910017.1
(22) Anmeldetag: 03.04.1996
(51) Int. Cl.: B60T 13/72, B60T 13/66, B60T 8/00

(54) **VORRICHTUNG UND VERFAHREN ZUM EINSTELLEN EINES VARIABLEN VERSTÄRKUNGSFAKTORS EINES BREMSKRAFTVERSTÄRKERS**
PROCESS AND DEVICE FOR REGULATING THE VARIABLE BOOSTING FACTOR IN A BRAKE BOOSTER
PROCEDE ET DISPOSITIF DE REGULATION D'UN FACTEUR D'ASSISTANCE VARIABLE D'UN SERVOFREIN

(30) Priorität: 29.04.1995 DE 19515848
(43) Veröffentlichungstag der Anmeldung: 25.02.1998
(73) Patentinhaber: Continental Teves AG & Co. oHG, 60488 Frankfurt (DE)
(72) Erfinder: SCHERER, Peter, D-64431 Weiterstedt (DE); BALZ, Jürgen, D-65510 Hünstedten (DE); SEMSCH, Martin, D-64291 Darmstadt (DE); BÖHM, Jürgen, D-65558 Oberneisen (DE); BILL, Karlheinz, D-63303 Dreieich (DE)
(86) Internationale Anmeldenummer: EP9601454
(87) Internationale Veröffentlichungsnummer: WO9634783

(56) Entgegenhaltungen:
- EP-A- 0 616 932
- WO-A-93/24353
- DE-A- 4 034 847

## Beschreibung

Die vorliegende Erfindung betrifft eine Vorrichtung sowie ein Verfahren zum Einstellen eines variablen Verstärkungsfaktors eines geregelten fremdbetätigbaren Bremskraftverstärkers, der eine Eingangskraft verstärkt und in eine Verzögerung eines Kraftfahrzeugs umwandelt.

Das Dokument WO 93/24353 beschreibt ein Regelverfahren, das in Abhängigkeit von der Pedalbetätigungsgeschwindigkeit einen fremdbetätigten Bremskraftverstärker einstellt.

Bei konventionellen Bremskraftverstärkern ist der Verstärkungsfaktor i, d.h. das Verhältnis zwischen Eingangs- und Ausgangskraft fest eingestellt. Dieser Faktor wird innerhalb konstruktiv bedingter Grenzen bei der Entwicklung des Bremskraftverstärkers festgelegt. Die Ausgangskraft des Bremskraftverstärkers wirkt auf einen Hauptbremszylinder und erzeugt dadurch einen der Kraft weitgehend proportionalen Bremsdruck und somit eine Verzögerung des Kraftfahrzeugs.

Bremsanlagen, die mit einem derartigen Bremskraftverstärker ausgestattet sind, haben den Nachteil, daß das Verhältnis zwischen Fußkraft und Kraftfahrzeugverzögerung nicht konstant ist. Dieses Verhältnis ist von variablen Parametern wie Fahrzeugmasse, Belagreibwerten und hydraulischen Wirkungsgraden abhängig. Der Fahrer muß sich also auf diese Schwankungen des Bremsverhaltens einstellen. Um ihn zu entlasten ist es wünschenswert, die Bremsanlage so zu verändern, daß ein konstantes Verhältnis zwischen Fahrerfußkraft und Fahrzeugverzögerung eingeregelt werden kann. Dazu wird ein Bremskraftverstärker mit variablem Verstärkungsfaktor benötigt, mit dem die Einflüsse der variablen Parametern auch während des Betriebes ausgeglichen werden können.

Weiter sind fremdansteuerbare Bremskraftverstärker bekannt, beispielsweise aus der P 43 24 688.5 Diese Schrift zeigt einen Vakummbremskraftverstärker, bei dem es mittels eines dritten Dichtsitzes am Tellerventil möglich ist, eine von der Betätigung des Fahrers unabhängige fremdangesteuerte Bremsung durchzuführen.

Aufgabe der vorliegenden Erfindung ist es, eine Vorrichtung und ein geeignetes Verfahren vorzuschlagen, welche es gestatten, einen bekannten Bremskraftverstärker mit einem variablen Verstärkungsfaktor zu betreiben.

Dies wird erfindungsgemäß durch die im Anspruch 1 angegebenen Maßnahmen erreicht. Hierbei wirkt sich vorteilhaft aus, daß die Eingangs- und die Ausgangsgrößen des Systems direkt zur Regelung herangezogen werden, so daß Ungenauigkeiten im System, mehrere sich addierende spielbehafte Größen mechanischer Bauteile etc. automatisch berücksichtigt werden, ohne im einzelnen bekannt sein zu müssen. Die genaue Ausgestaltung des Bremskraftverstärkers ist nebensächlich, da der Regler nur den Ausgangswert regelt, egal auf welche Weise dieser eingestellt wird. Die Fußkraft geht zum einen direkt als mechanische Eingangsgröße, die mit der fest vorgegebenen Verstärkung des Bremskraftverstärkers verstärkt wird in den Bremskraftverstärker ein und zum anderen über die variable Verstärkung eines Sollwerts in den Regler. Dies hat zur Folge, daß die Fußkraft zumindest mit der fest eingestellten Verstärkung des Bremskraftverstärkers verstärkt wird, die ggf. von dem variabel höher verstärkten Drucksollwert am Regler übersteuert wird.

Der Bremskraftverstärker ist fremdbetätigbar, d.h. unabhängig von der Pedalbetätigung und somit unabhängig vom Wunsch des Fahrers. Handelt es sich um einen Vakuumbremskraftverstärker, der einen verschiebbaren dritten Dichtsitz aufweist, wie aus der P 43 24 688.5 bekannt, so hat die vorgeschlagene, auf einer Regelung des Verstärkungsfaktors beruhende Lösung gegenüber einer ebenfalls denkbaren Steuerung des Bremskraftverstärkers durch Positionsregelung des dritten Dichtsitzes relativ zum Steuergehäuse den Vorteil, daß weder eine extrem hohe Positioniergenauigkeit des dritten Dichtsitzes noch eine zusätzliche Sensorik zur Wegbestimmung des dritten Dichtsitzes relativ zum Steuergehäuse erforderlich ist.

Das erfindungsgemäße Verfahren zum Einstellen eines variablen Verstärkungsfaktors eines geregelten fremdbetätigbaren Bremskraftverstärkers besteht aus den Verfahrensschritten:
- eine Eingangskraft wird vom Bremskraftverstärker in eine verstärkte Ausgangsgröße umgesetzt,
- diese Ausgangsgröße wird mit einem Sollwert verglichen,
- ein Regler ermittelt anhand dieser Information ein Stellsignal,
- dieses bestimmt die Stärke der Fremdbetätigung des Bremskraftverstärkers,
- wobei weiterhin die Größe der Eingangskraft gemessen,
- diese Meßgröße mit einem variablen Verstärkungsfaktor verstärkt,
- das verstärkte Signal einer Regelanpassung unterworfen und
- das angepaßte Signal als Sollwert an den Regler weitergeleitet wird.

Dieses Verfahren kann für alle Anwendungen, die den Verstärkungsfaktor des Bremskraftverstärkers durch übergeordnete Reglerstrukturen einstellen müssen verwendet werden, da es in der Lage ist, entsprechend einer solchen Vorgabe den Verstärkungsfaktor einzuregeln. Der Verstärkungsfaktor ist dabei definiert als das Verhältnis zwischen Eingangs- und Ausgangskraft des Bremskraftverstäkers. Diese Ausgangskraft wird z.B. über ein Tandemhauptbremszylinder in einen hydraulischen Bremsdruck umgewandelt bzw. allgemein in eine Verzögerung des Fahrzeugs. Deshalb kann man die Systemgrenze für ein Konzept der variablen Verstärkung auch weiter fassen, so daß der zusammenhang zwischen Eingangs kraft des Bremskraftverstärkers und der erzeugten Verzögerung bzw. dem erzeugten Bremsdruck geregelt wird. Dadurch werden die Toleranzen bei der Umwandlung von Ausgangskraft in Verzögerung bzw. Bremsdruck in die Regelung der variablen Verstärkung mit einbezogen und ausgeregelt. Das bedeutet, der Regler übersteuert die allein durch die Fußkraft hervorgerufene Verstärkung, falls der Sollwert Aₛ höher als der Istwert Aᵢ liegt.

Vorteilhafterweise ist die Ausgangsgröße die Verzögerung des Fahrzeugs, die direkt über einen Verzögerungssensor meßbar ist. Als Ausgangsgröße kann auch der hydraulische Druck der Bremsanlage verwendet werden, welcher über einen einfachen Drucksensor meßbar ist. Weitere denkbare Ausgangsgrößen sind der Belagweg in der Radbremse, die Anpreßkraft in der Radbremse oder ähnliche geeignete Größen.

Es ist vorgesehen, den Regler auf einer elektrischen Basis zu realisieren, wobei zur Verstärkung ein analoges Signal bevorzugt wird, aber auch ein digitales Signal bei geeigneten Sensoren möglich ist.

Weitere Vorteile der Erfindung ergeben sich aus der nachfolgenden Beschreibung anhand der Abbildungen. Dabei zeigen
- Fig. 1: eine schematische Darstellung eines erfindungsgemäßen Ausführungsbeispiels,
- Fig. 2: ein Druck-Kraft-Diagramm pᵢ (F_{F} ).

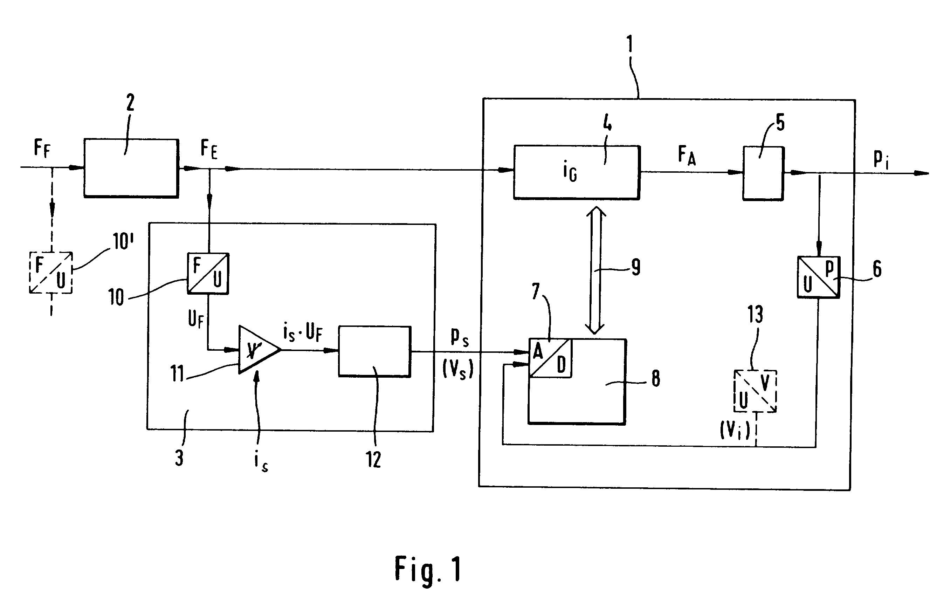

Fig. 1 zeigt schematisch eine geregelte fremdansteuerbare Bremskraftverstärkereinheit 1, ein Bremspedal 2 sowie eine erfindungsgemäße Vorrichtung 3. Eine vom Fahrer des Kraftfahrzeugs auf das Bremspedal 2 ausgeübten Fußkraft F_{F} wird durch die Übersetzung des Bremspedals 2 verstärkt und als Eingangs kraft F_{E} in den Bremskraftverstärker 4 eingeleitet. Dieser verstärkt das Eingangssignal F_{E} um den fest eingestellten Verstärkungsfaktor i_{G} zur Ausgangs kraft F_{A}. Diese wirkt auf den Tandemhauptzylinder 5, der einen hydraulischen Druck pᵢ in der Bremsanlage erzeugt.

Ein Drucksensor 6 wandelt den Druck pᵢ in ein Spannungssignal um, welches über einen Analog-Digital-Wandler 7 dem Regler 8 zugeführt wird. Dieser vergleicht den tatsächlichen Druck pᵢ mit einem von außen vorgegebenen Drucksollwert pₛ, um bei einer Abweichung den Bremskraftverstärker 4 durch Fremdansteuerung zu regeln. Diese Druckregelung ist durch den Pfeil 9 symbolisiert.

Die Vorrichtung 3 weist einen Kraftsensor 10, einen Verstärker 11 mit variabel einstellbarem Verstärkungsfaktor iₛ und eine elektrische Signalanpassungseinheit 12 auf. Der Kraftsensor 10 wandelt die Eingangskraft F_{E} in ein Spannungssignal U_{F} um, welches vom Verstärker 11 mit dem von außen vorgegebenen Sollwert iₛ des Verstärkungsfaktors verstärkt wird und durch die Signalanpassungeinheit 12 in den Drucksollwert pₛ umgewandelt wird. Die in der Vorrichtung 3 realisierte Elektronik, die Sensorik und Signalaufbereitung umfaßt, steuert die geregelte, fremdansteuerbare Bremskraftverstärkereinheit 1 als Komponente des Systems zur variablen Bremskraftverstärkung an.

Der Bremskraftverstärker 4 basiert auf dem Konzept des Vakummbremskraftverstärkers. Er verfügt über die normale Funktionalität eines Vakuumbremskraftverstärkers, ist jedoch zusätzlich in der Lage, entsprechend einer externen elektrischen Solldruckvorgabe pₛ den hydraulischen Bremsdruck pᵢ einzuregeln. Eine Kombination von normaler Fußkraftbetätigung und Fremdansteuerung ist möglich. Der Bremskraftverstärker 4 stellt dabei den höheren Druck der zwei Vorgaben ein.

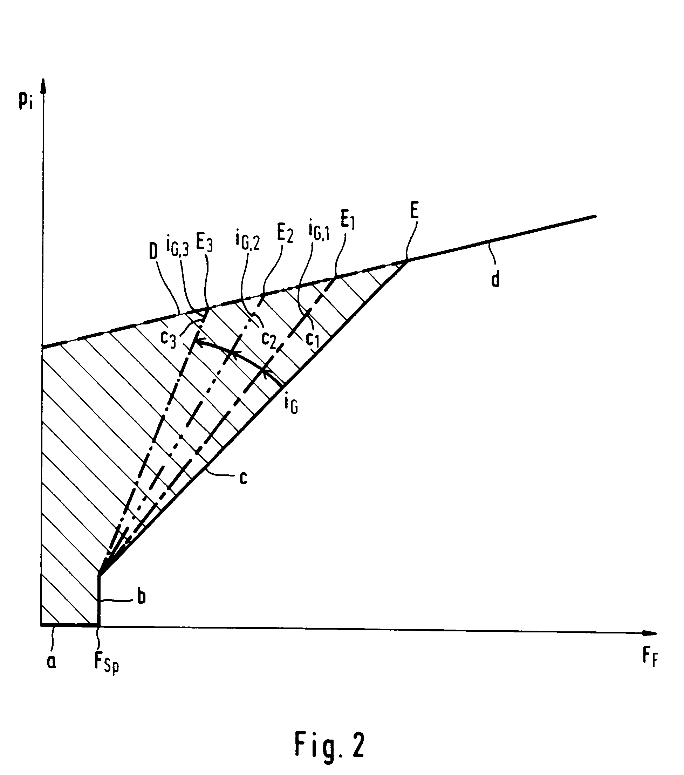

Zur Realisierung einer variablen Verstärkung des Bremskraftverstärkers wird die konstruktiv bedingte Grundverstärkung i_{G} durch eine elektronische Fremdbetätigung übersteuert. Dazu wird die Fahrerfußkraft F_{F} entweder am Bremspedal 2 direkt durch den gestrichelt dargestellten Kraftsensor 10' oder nach Verstärkung der Fußkraft F_{F} durch das Bremspedal 2 an der Kolbenstange des Bremskraftverstärkers 4 mittels eines nicht näher spezifizierten Kraftsensors 10 gemessen. Aus dieser Größe wird über den variablen Verstärker 11 und die elektrische Signalanpassungseinheit 12 eine Solldruckvorgabe pₛ generiert. Durch diese Fremdbetätigung kann der Bremsdruck pᵢ, der sich aus der Fahrerfußkraft F_{F} und dem Grundverstärkungsfaktor i_{G} des Bremskraftverstärkers ergibt, übersteuert werden. Diese Erhöhung des Bremsdrucks pᵢ durch die Fremdbetätigung hat denselben Effekt, wie eine Erhöhung des Verstärkungsfaktors i_{G}. Mit diesem Konzept kann der Verstärkungsfaktor von i_{G} beliebig und stufenlos durch Verstellung des elektrischen Verstärkers 11 auch während des Betriebs bis zur Aussteuerungskennlinie erhöht werden. Dies ist im folgenden zur Fig. 2 näher erläutert.

Fig. 2 zeigt ein Druck-Kraft-Diagramm, bei dem der hydraulische Druck pᵢ(F_{F}) in Abhängigkeit von der Fußkraft F_{F} dargestellt ist.

Die durchgezogene Linie zeigt den Kennlinienverlauf eines normalen Bremskraftverstärkers mit fest vorgegebener Grundverstärkung i_{G}. Im Bereich a der Kurve erfolgt bei Erhöhung der Fußkraft F_{F} von Null aus zunächst keine Druckerhöhung. Ab einem gewissen Wert F_{Sp} steigt der Druck pᵢ stark an. Dies ist im Bereich b der Kennlinie dargestellt, dem sogenannten "Springer"-Bereich. Im Bereich c der Kennlinie wird die Fußkraft F_{F} mit dem fest eingestellten Verstärkungsfaktor i_{G} verstärkt, bis sie im Bereich d in die Aussteuerlinie D übergeht. Diese ergibt sich aus dem maximalen vom Bremskraftverstärker erzeugbaren Druck und dem der jeweiligen Fußkraft F_{F} entsprechenden Druck. Der Übergang des Bereichs c in den Bereich d ist der sogenannte Aussteuerungspunkt E. Wird der Grundverstärkungsfaktor i_{G} erhöht, so geht der Bereich c in einen der mit c₁, c₂ und c₃ bezeichneten, beispielhaft dargestellten Proportionalbereiche mit entsprechend höheren Grundverstärkungswerten, i_{G,1}, i_{G,2} bzw. i_{G,3} über. Der Aussteuerungspunkt E₁, E₂, bzw. E₃ verschiebt sich entsprechend nach links. 1

Eine reine Variation des Grundverstärkungsfaktors i_{G} des Bremskraftverstärkers 4 deckt lediglich den zwischen den Kennlinien c und c₃ sowie der Aussteuerlinie D eingegrenzten Bereich ab. Die erfindungsgemäße Lösung zum Einstellen eines variablen Verstärkungsfaktor iₛ des Bremskraftverstärkers bietet jedoch weitreichendere Möglichkeiten, den Zusammenhang zwischen Fußkraft F_{F} und Bremsdruck pᵢ zu beeinflussen. Die Verstärkung iₛ läßt sich über den Wert von i_{G} hinaus beliebig erhöhen, wobei jedoch die Einschränkung gilt, daß der Bremskraftverstärker 4 fremdbetätigt die Ausgangskraft F_{A} nur bis zu seinem Aussteuerpunkt erhöhen kann. Dies entspricht der Aussteuerlinie D in Fig. 2.

Der Austeuerungspunkt E ist durch die konstruktive Auslegung des Bremskraftverstärkers 4 und dessen verfügbare Antriebsquelle, bei einem Vakuumbremskraftverstärker durch das verfügbare,Vakuum, festgelegt. Da die normale mechanische Bremskraftverstärkerfunktion durch eine Fremdbetätigung immer überlagert wird, läßt sich die konstruktiv vorgegebene Grundverstärkung i_{G} nicht unterschreiten. Daraus ergibt sich der in Fig. 2 schraffierte Arbeitsbereich, in dem eine beliebige Kennlinie durch die Elektronik, d.h durch Vorgabe von iₛ realisiert werden kann. Da bei dieser Lösung der Verstärkungsfaktor i_{G} durch Änderung eines elektrischen Verstärkungsfaktors eingestellt wird, ist eine einfache elektrische Schnittstelle gegeben. Deshalb ist die vorgeschlagene Vorrichtung 3 eine universelle Komponente für alle übergeordneten Systeme, welche die mechanische Verstärkung eines Bremskraftverstärkers 4 verändern müssen, beispielsweise Verzögerungsregler.

Statt den hydraulischen Druck pᵢ und einen Drucksollwert pₛ zur Regelung zu verwenden, können auch entsprechende Verzögerungs-Ist- und -Sollwerte Vᵢ und Vₛ verwendet werden. Statt des Drucksensors 6 ist dann ein Verzögerungssensor 13 vorzusehen, der in Fig. 1 als Alternative gestrichelt dargestellt ist und dessen Ausgangssignale Vᵢ an den Regler 8 weitergegeben wird. Die Vorrichtung 3 muß dann einen Verzögerungsollwert Vₛ an den Regler 8 bereitstellen.

## Patentansprüche

1. Vorrichtung zum Einstellen eines variablen Verstärkungsfaktors (iₛ) eines geregelten, fremdbetätigbaren Bremskraftverstärkers (4 ) der eine Eingangskraft (F_{E},F_{F}) verstärkt und über einen Kraft-Druck-Wandler (5) in einen hydraulischen Druck (pᵢ) einer Bremsanlage umwandelt und der über einen Regler (8) zum Einstellen eines Drucksollwerts (pₛ) fremdbetätigt geregelt werden kann, dadurch **gekennzeichnet,** daß die Vorrichtung einen Kraftsensor (10,10') zur Messung der Eingangskraft (F_{E,}F_{F}) aufweist, einen variablen Verstärker (11) zur Verstärkung des Ausgangssignals des Kraftsensors (10,10') um den Verstärkungsfaktor (iₛ) und durch eine elektrisches Signalanpassungseinheit (12) zum Erzeugen eines Drucksollwertes (pₛ) aus dem Ausgangssignal des Verstärkers (11).

2. Vorrichtung nach Anspruch 1, dadurch **gekennzeichnet,** daß der Kraft-Druck-Wandler ein Hauptzylinder oder ein Tandemhauptzylinder (5) ist.

3. Vorrichtung nach Anspruch 1 oder 2, dadurch **gekennzeichnet,** daß die Eingangskraft (F_{E}) die Fußkraft (F_{F}) oder die durch das Bremspedal (2) übersetzte Fußkraft (F_{F}) ist.

4. Verfahren zum Einstellen eines variablen Verstärkungsfaktors (iₛ) eines geregelten fremdbetätigbaren Bremskraftverstärkers (4), bestehend aus folgenden Verfahrensschritten:
- eine Eingangskraft (F_{E}) wird vom Bremskraftverstärker (4) in eine verstärkte Ausgangsgröße (Aᵢ) umgesetzt,
- die Ausgangsgröße (Aᵢ) wird mit einem Sollwert (Aₛ) verglichen,
- ein Regler (8) ermittelt anhand dieser Information ein Stellsignal,
- das Stellsignal bestimmt die Stärke der Fremdbetätigung des Bremskraftverstärkers (4),
dadurch **gekennzeichnet,** daß
- die Größe (U_{F}) der Eingangskraft (F_{E}) gemessen,
- diese Meßgröße (U_{F}) mit einem variablen Verstärkungsfaktor (iₛ) verstärkt,
- das verstärkte Signal (iₛ x U_{F}) eine Regelanpassung unterworfen und
- das angepaßte Signal als Sollwert (Aₛ) an den Regler (8) weitergeleitet wird.

5. Verfahren nach Anspruch 4, dadurch **gekennzeichnet,** daß die Ausgangsgröße (Aᵢ) die Verzögerung (Vᵢ) des Fahrzeugs und der Sollwert (Aₛ) ein Verzögerungssollwert (Vₛ) ist.

6. Verfahren nach Anspruch 4, dadurch **gekennzeichnet,** daß die Ausgangsgröße (Aᵢ) der hydraulische Druck (pᵢ) im Bremssystem des Fahrzeugs und der Sollwert (Aₛ) ein Drucksollwert (pₛ) ist.

7. Verfahren nach einem der Ansprüche 4 bis 6, dadurch **gekennzeichnet,** daß die Eingangskraft (F_{E}) in ein analoges oder digitales Signal (U_{F}) umgewandelt wird.

8. Verfahren nach einem der Ansprüche 4 bis 7, dadurch **gekennzeichnet,** daß die Eingangskraft (F_{E}) entweder direkt die Fußkraft (F_{F}) des Fahrers oder die durch ein Bremspedal (2) übersetzte Fußkraft (F_{F}) ist.

## Claims

1. Device for adjusting a variable boosting factor (is) of a controlled, independently activatable brake power booster (4) which boosts an input force (F_{E}, F_{F}) and converts it into a hydraulic pressure (pᵢ) of a brake system by way of a force-pressure converter (5) and which can be controlled by independent activation by way of a controller (8) adapted to adjust a nominal pressure value (pₛ),
**characterized** in that the device includes a force sensor (10, 10') for measuring the input force (F_{E}, F_{F}), a variable booster (11) for boosting the output signal of the force sensor (10, 10') by the boosting factor (iₛ), and an electrical signal-adapting unit (12) for generating a nominal pressure value (pₛ) from the output signal of the booster (11).

2. Device as claimed in claim 1,
**characterized** in that the force-pressure converter is a master cylinder or a tandem master cylinder (5).

3. Device as claimed in claim 1 or claim 2,
**characterized** in that the input force (F_{E}) is the pedal force (F_{F}) or the pedal force (F_{F}) converted by the brake pedal (2).

4. Method of adjusting a variable boosting factor (iₛ) of a controlled, independently activatable brake power booster (4), including the following method steps:
- an input force (F_{E}) is converted by the brake power booster (4) into a boosted output quantity (Aᵢ),
- the output quantity (Aᵢ) is compared with a nominal value (Aₛ),
- a controller (8) determines a corrective signal from this information,
- the corrective signal defines the magnitude of the independent activation of the brake power booster (4),
**characterized** in that
- the magnitude (U_{F}) of the input force (F_{E}) is measured,
- the measured quantity (U_{F}) is boosted by a variable boosting factor (iₛ),
- the boosted signal (iₛ x U_{F}) is subjected to a control adaption, and
- the adapted signal is conducted as a nominal value (Aₛ) to the controller (8).

5. Method as claimed in claim 4,
**characterized** in that the output quantity (Aᵢ) is the deceleration (Vᵢ) of the vehicle and the nominal value (Aₛ) is a nominal deceleration value (Vₛ).

6. Method as claimed in claim 4,
**characterized** in that the output quantity (Aᵢ) is the hydraulic pressure (pᵢ) in the brake system of the vehicle, and the nominal value (Aₛ) is a nominal pressure value (pₛ).

7. Method as claimed in any one of claims 4 to 6,
**characterized** in that the input force (F_{E}) is converted into an analog or digital signal (U_{F}).

8. Method as claimed in any one of claims 4 to 7,
**characterized** in that the input force (F_{E}) either is directly the pedal force (F_{F}) of the driver or the pedal force (F_{F}) converted by a brake pedal (2).

## Revendications

1. Dispositif de réglage d'un facteur d'amplification (iₛ) variable d'un amplificateur de force de freinage (4) à possibilité d'actionnement extérieur et objet d'une régulation, qui amplifie une force d'entrée (F_{E}, F_{F}) et la convertit au moyen d'un convertisseur force-pression (5) en une pression hydraulique (pᵢ) d'un système de freinage et qui peut faire l'objet d'une régulation par actionnement extérieur, au moyen d'un régulateur (8), en vue de régler une valeur de consigne de pression (pₛ), caractérisé en ce que le dispositif comprend un capteur de force (10, 10') servant à mesurer la force d'entrée (F_{E}, F_{F}), un amplificateur variable (11) servant à amplifier le signal de sortie du capteur de force (10, 10'), de la valeur d facteur d'amplification (iₛ), et une unité d'adaptation de signal électrique (12) servant à produire une valeur de consigne de pression (pₛ) à partir du signal de sortie de l'amplificateur (11).

2. Dispositif suivant la revendication 1, caractérisé en ce que le convertisseur force-pression est un maître-cylindre ou un maître-cylindre tandem (5).

3. Dispositif suivant la revendication 1 ou 2, caractérisé en ce que la force d'entrée (F_{E}) est la force au pied (F_{F}) ou la force au pied (F_{F}) démultipliée au moyen de la pédale de frein (2).

4. Procédé de réglage d'un facteur d'amplification (iₛ) variable d'un amplificateur de force de freinage (4) à possibilité d'actionnement extérieur et objet d'une régulation, constitué des opérations suivantes de procédé :
- une force d'entrée (F_{E}) est convertie par l'amplificateur de force de freinage (4) en une grandeur de sortie (Aᵢ) amplifiée,
- la grandeur de sortie (Aᵢ) est comparée à une valeur de consigne (Aₛ),
- un régulateur (8) établit, à l'aide de cette information, un signal de réglage,
- le signal de réglage détermine l'intensité de l'actionnement extérieur de l'amplificateur de force de freinage (4),
caractérisé en ce que
- la grandeur (U_{F}) de la force d'entrée (F_{E}) est mesurée,
- cette grandeur mesurée (U_{F}) est amplifiée avec un facteur d'amplification (iₛ) variable,
- le signal amplifié (iₛ x U_{F}) est soumis à une adaptation de régulation et
- le signal adapté est transmis en tant que valeur de consigne (Aₛ) au régulateur (8).

5. Procédé suivant la revendication 4, caractérisé en ce que la grandeur de sortie (Aᵢ) est la décélération (Vᵢ) du véhicule et la valeur de consigne (Aₛ) est une valeur de consigne de décélération (Vₛ).

6. Procédé suivant la revendication 4, caractérisé en ce que la grandeur de sortie (Aᵢ) est la pression hydraulique (pᵢ) dans le système de freinage du véhicule et la valeur de consigne (Aₛ) est une valeur de consigne de pression (pₛ).

7. Procédé suivant l'une des revendications 4 à 6, caractérisé en ce que la force d'entrée (F_{E}) est convertie en un signal analogique ou numérique (U_{F}).

8. Procédé suivant l'une des revendications 4 à 7, caractérisé en ce que la force d'entrée (F_{E}) est soit directement la force au pied (F_{F}) exercée par le conducteur, soit la force au pied (F_{F}) démultipliée au moyen d'une pédale de frein (2).
